# EUROPEAN PATENT APPLICATION

(11) **EP 3 789 696 A1**
(43) Date of publication of application: **10.03.2021**
(21) Application number: 18917378.4
(22) Date of filing: 01.05.2018
(51) Int. Cl.: F25B 30/06, F04B 39/00, F16F 15/08, F25B 1/00, F25B 31/00

(54) **GEOTHERMAL HEAT PUMP SYSTEM**

(71) Applicant: Mitsubishi Electric Corporation, Tokyo 100-8310 (JP)
(72) Inventor: SHIBATA, Masafumi, Tokyo 100-8310 (JP); AOYAGI, Yoshiro, Tokyo 100-8310 (JP)
(74) Representative: Diehl & Partner
(86) International application number: PCT/JP2018/017428
(87) International publication number: WO 2019/211894

(57) **Abstract**

This geothermal heat pump system is provided with: a refrigerant circuit which comprises a compressor in which an antivibration material has been provided, a primary-side heat exchanger which exchanges heat between a refrigerant and a liquid primary-side heat medium that has the ground as the heat source, and a secondary-side heat exchanger which exchanges heat between the refrigerant and a liquid secondary-side heat medium; and an antivibration support platform which comprises an antivibration member and which supports the compressor, the primary-side heat exchanger in the secondary-side heat exchanger with the antivibration member interposed therebetween.

## Description

### Technical Field

The present disclosure relates to a geothermal heat pump system including a refrigerant circuit, and more particularly to a vibration isolation structure.

### Background Art

Some geothermal heat pump system uses the ground or a lake as a heat source to collect heat by circulating a primary heat medium through an underground heat exchanger, which is installed underground, with a heat pump. The collected heat is supplied to a secondary heat medium that circulates through a load. As underground temperatures are more stable than outside air temperatures throughout the year, the geothermal heat pump system that uses geothermal heat has attracted attention in recent years from the viewpoint of energy efficiency and reduction in CO₂ emissions. The geothermal heat pump system includes a refrigerant circuit including a compressor that compresses refrigerant, a primary heat exchanger that exchanges heat between a primary heat medium in a liquid state and the refrigerant, and a secondary heat exchanger that has a secondary heat medium in a liquid state and the refrigerant.

As the geothermal heat pump system collects and releases heat through the underground heat exchanger, circuit components provided between pipes connected to the load and pipes connected to the underground heat exchanger are usually disposed in the same housing. As the housing of the geothermal heat pump system is installed indoors in a building, unlike an air-conditioning apparatus that is disposed outdoors and provides heat exchange with outside air, the compressor, which is a noise source, is installed indoors. Accordingly, the geothermal heat pump system requires a structure for reducing noise and vibration.

A technology for reducing transmission of vibration from a compressor of an air-conditioning apparatus has been disclosed (see, for example, Patent Literature 1). The air-conditioning apparatus according to Patent Literature 1 is structured in such a manner that a compressor provided with vibration isolators, an air heat exchanger provided with vibration isolators, and a water heat exchanger are arranged on the same support unit that is supported by vibration isolators. To reduce noise from the compressor without affecting the supply of outside air to the air heat exchanger, a soundproof box is provided over the support unit to enclose the compressor.

### Citation List

### Patent Literature

Patent Literature 1: Japanese Unexamined Patent Application Publication No. 2005-241197

### Summary of Invention

### Technical Problem

As the housing of the geothermal heat pump system is installed indoors, a reduction in the size of the housing is desired as well as a reduction in vibration and noise. However, according to Patent Literature 1, the support unit is required to have an installation area for soundproof walls that surround the compressor in addition to installation areas for the compressor, the primary heat exchanger, and the secondary heat exchanger. Thus, when the soundproof box that surrounds the compressor is provided, the width and depth of the housing are increased. When the soundproof box is not provided, noise from the compressor leaks through the air heat exchanger. In addition, when the mass of the support unit is increased by increasing the thickness of the support unit to reduce transmission of vibration of the compressor, the height of the housing is increased. Thus, it is difficult to achieve both a reduction in the size of the housing of the geothermal heat pump system and a reduction in noise and vibration.

The present disclosure has been made to solve the above-described problem, and an object of the present disclosure is to provide a geothermal heat pump system that includes a small housing and in which noise and vibration from the compressor can be reduced.

### Solution to Problem

A geothermal heat pump system according to an embodiment of the present disclosure includes a refrigerant circuit including a compressor provided with a vibration isolator, a primary heat exchanger that exchanges heat between refrigerant and a primary heat medium that is in a liquid state and uses ground as a heat source, and a secondary heat exchanger that exchanges heat between the refrigerant and a secondary heat medium that is in a liquid state; and a vibration isolation support base that includes a vibration isolation unit and supports the compressor, the primary heat exchanger, and the secondary heat exchanger with the vibration isolation unit disposed between the vibration isolation support base and a set of the compressor, the primary heat exchanger, and the secondary heat exchanger.

### Advantageous Effects of Invention

The geothermal heat pump system according to an embodiment of the present disclosure is structured in such a manner that two heat exchangers that each exchange heat between a heat medium in a liquid state and refrigerant are disposed on the vibration isolation support base together with the compressor provided with the vibration isolator. Therefore, noise can be reduced. As a result, the area in which a soundproof material is provided on the vibration isolation support base can be partially reduced, and the area of the vibration isolation support base can be reduced accordingly. In addition, as the two heat exchangers, whose weights are relatively large compared to other components of the refrigerant circuit, are placed on the vibration isolation support base, the two heat exchangers are used as masses on the vibration isolation support base so that sufficient vibration isolation performance can be achieved without increasing the thickness of the vibration isolation support base. Therefore, the size of the housing can be reduced, and noise and vibration transmitted from the compressor can also be reduced.

### Brief Description of Drawings

[Fig. 1] Fig. 1 is a schematic diagram schematically illustrating the structure of geothermal heat pump systems according to Embodiments 1 and 2 of the present disclosure.
[Fig. 2] Fig. 2 is a side view of a vibration isolation structure of the geothermal heat pump system according to Embodiment 1 of the present disclosure.
[Fig. 3] Fig. 3 is a plan view of the vibration isolation structure of the geothermal heat pump system according to Embodiment 1 of the present disclosure.
[Fig. 4] Fig. 4 is a plan view of another example of the vibration isolation structure of the geothermal heat pump system according to Embodiment 1 of the present disclosure.
[Fig. 5] Fig. 5 is a side view of another example of the vibration isolation structure of the geothermal heat pump system according to Embodiment 1 of the present disclosure.
[Fig. 6] Fig. 6 is a side view of a vibration isolation structure of the geothermal heat pump system according to Embodiment 2 of the present disclosure. Description of Embodiments

### Embodiment 1

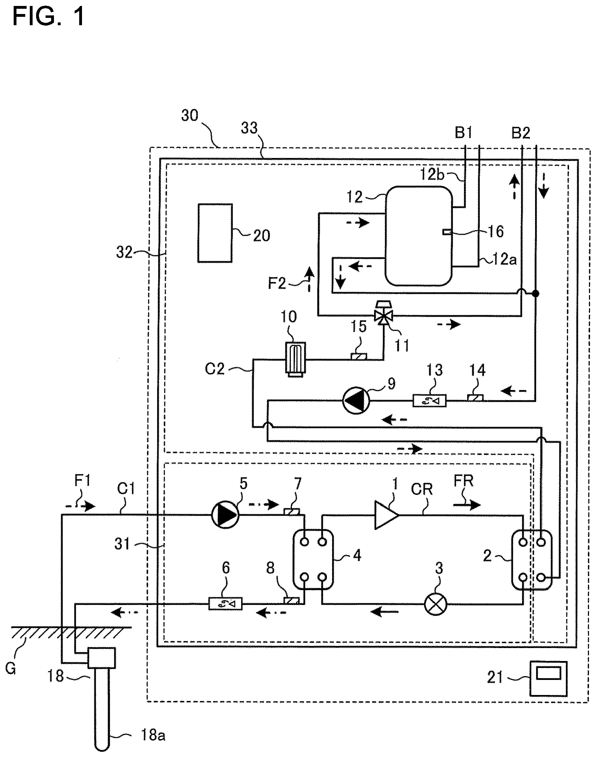

Fig. 1 is a schematic diagram schematically illustrating the structure of a geothermal heat pump system according to Embodiment 1 of the present disclosure. A geothermal heat pump system 30 is installed indoors in a building. As illustrated in Fig. 1, the geothermal heat pump system 30 is connected to an underground heat exchanger 18 that is installed underground and loads that are installed indoors. The geothermal heat pump system 30 collects geothermal heat through a primary circuit C1 including the underground heat exchanger 18 with a heat pump, and supplies the collected heat to the loads connected to a secondary circuit C2.

The loads include, for example, a hot water supply load B1 that supplies hot water to, for example, a bath, and an air-conditioning load B2 including a radiator. Brine circulates in the primary circuit C1, and water circulates in the secondary circuit C2. A primary heat medium that flows through the primary circuit C1 and a secondary heat medium that flows through the secondary circuit C2 are each only required to be any liquid fluid. An example in which the primary heat medium is brine and the secondary heat medium is water will be described below.

The underground heat exchanger 18 is installed underground, and exchanges heat between the brine and the ground G, which is a heat source. When, for example, the underground temperature is higher than the outside air temperature, the brine is heated by receiving geothermal heat. The underground heat exchanger 18 includes a heat collection pipe group 18a through which the brine circulates. The heat collection pipe group 18a, which is made of a resin or other substance and is U-shaped, for example, is vertically installed underground. The heat exchange performance of the underground heat exchanger 18 differs depending on the location and depth at which the heat collection pipe group 18a is installed even when the size of the heat collection pipe group 18a is constant.

When a sufficiently large installation area is available, the heat collection pipes may instead be horizontally installed. In such a case, the heat collection pipes are bent a plurality of times in a meandering manner so that the heat collection pipes are in contact with the ground G over an area greater than or equal to a certain area. To minimize the influence of the temperature variation at the ground surface due to the air temperature, solar radiation, precipitation, and snowfall, the heat collection pipes are installed at or below a certain depth.

The geothermal heat pump system 30 includes a heat pump device 31 that performs a heat pump cycle operation, a hot water heating device 32 that supplies hot water to the loads, a controller 20, and a remote controller 21 operated by a user. The heat pump device 31 has various components of a refrigerant circuit CR and some components of the primary circuit C1 mounted in the heat pump device 31. The refrigerant circuit CR is formed by sequentially connecting a primary heat exchanger 4, a compressor 1 that circulates refrigerant through the refrigerant circuit CR, a secondary heat exchanger 2, and a pressure reducing device 3 that reduces the pressure of the refrigerant with refrigerant pipes. The brine circulated in the primary circuit C1 flows into the primary heat exchanger 4, and the water circulated in the secondary circuit C2 flows into the secondary heat exchanger 2. The refrigerant may be, for example, R410A, which is an HFC based mixed refrigerant, or R32.

The compressor 1, which compresses the refrigerant, is a variable displacement compressor whose rotation frequency is controlled by an inverter. The primary heat exchanger 4 exchanges heat between the brine in the primary circuit C1 and the refrigerant in the refrigerant circuit CR. In a heating operation, the primary heat exchanger 4 is used as an evaporator to heat and evaporate the refrigerant by using geothermal heat received by the brine. The primary heat exchanger 4 is composed of, for example, a plate heat exchanger in which a plurality of plates are stacked. The primary heat exchanger 4 may instead be composed of a double tube heat exchanger including a heat transfer tube through which the refrigerant flows and a heat transfer tube through which water flows.

The pressure reducing device 3 is composed of, for example, an electronic expansion valve having a variable opening degree. The secondary heat exchanger 2 exchanges heat between the water in the secondary circuit C2 and the refrigerant in the refrigerant circuit CR. In the heating operation, the secondary heat exchanger 2 is used as a condenser to generate hot water by heating the water with the refrigerant heated by the geothermal heat. The secondary heat exchanger 2 is composed of, for example, a plate heat exchanger. The secondary heat exchanger 2 may instead be composed of a double tube heat exchanger.

The primary circuit C1 is formed by connecting a primary pump 5 that circulates the brine in the primary circuit C1, the primary heat exchanger 4, and the underground heat exchanger 18 with pipes. The primary pump 5 is mounted in the heat pump device 31 together with the above-described primary heat exchanger 4.

A plurality of sensors for detecting the operational state of the primary circuit C1 are mounted in the heat pump device 31, and the sensors include a first flow rate sensor 6, an inlet temperature sensor 7, and an outlet temperature sensor 8. The first flow rate sensor 6 measures the flow rate of the brine that circulates in the primary circuit C1. The inlet temperature sensor 7 is provided at a brine inlet of the primary heat exchanger 4 and measures the temperature of the brine that flows into the primary heat exchanger 4 (inlet temperature). Thus, the inlet temperature sensor 7 measures the temperature of the brine that has exchanged heat with the ground in the underground heat exchanger 18 and has been drawn up by the primary pump 5. The outlet temperature sensor 8 is provided at a brine outlet of the primary heat exchanger 4 and measures the temperature of the brine that flows out of the primary heat exchanger 4 (outlet temperature). The inlet temperature sensor 7 and the outlet temperature sensor 8 are each composed of, for example, a thermistor.

The hot water heating device 32 has various devices of the secondary circuit C2 mounted in the hot water heating device 32. The secondary circuit C2 is formed by connecting a secondary pump 9, the secondary heat exchanger 2, an electric heater 10, a flow switching device 11, and a hot water tank 12 with pipes. The secondary pump 9 circulates water in the secondary circuit C2. In the heating operation, the electric heater 10 heats the hot water generated by heating the water in the secondary heat exchanger 2. The flow switching device 11 is composed of, for example, a three-way valve, and sets the destination of the hot water to one of the hot water supply load B1 and the air-conditioning load B2.

The hot water tank 12 is provided between the flow switching device 11 and the hot water supply load B1 in the secondary circuit C2. The hot water tank 12 is substantially cylindrical, and at least the shell of the hot water tank 12 is made of a metal material, such as stainless steel. The hot water tank 12 is covered with a heat insulating material to reduce heat dissipation from water stored in the hot water tank 12.

A water supply pipe 12a, which is connected to, for example, an external water supply, is connected to a lower portion of the hot water tank 12, and water is supplied from an external water source to the hot water tank 12 through the water supply pipe 12a and stored in the hot water tank 12. In a water-heating operation, the water stored in the hot water tank 12 is heated by the hot water that circulates in the secondary circuit C2. The water stored in the hot water tank 12 has a temperature stratification in such a manner that the temperature of the water stored in the hot water tank 12 is high in an upper region and low in a lower region. A hot-water discharge pipe 12b, which is connected to the hot water supply load B1, is connected to an upper portion of the hot water tank 12. The water stored in the hot water tank 12 is supplied to the hot water supply load B1 through the hot-water discharge pipe 12b.

A plurality of sensors for detecting the operational state of the secondary circuit C2 are mounted in the hot water heating device 32, and the sensors include a second flow rate sensor 13, a forward temperature sensor 14, a return temperature sensor 15, and a tank temperature sensor 16. The second flow rate sensor 13 measures the flow rate of the water that circulates in the secondary circuit C2. The forward temperature sensor 14 measures the temperature of the water that flows into the secondary heat exchanger 2 (forward temperature). The return temperature sensor 15 measures the temperature of the generated hot water (return temperature). The tank temperature sensor 16 detects the temperature of the water stored in the hot water tank 12. The inlet temperature sensor 7, the outlet temperature sensor 8, and the tank temperature sensor 16 are each composed of, for example, a thermistor.

The above-described controller 20 is also mounted in the hot water heating device 32. The controller 20 is composed of, for example, a microcomputer, and controls the overall operation of the geothermal heat pump system 30. The controller 20 is connected to the remote controller 21 wirelessly, or with wires, and receives an operation command input to the controller 20 by the user through the remote controller 21. The controller 20 also receives measurement information obtained by the plurality of sensors that detect the operational state of the primary circuit C1 and the plurality of sensors that detect the operational state of the secondary circuit C2. The controller 20 controls the refrigerant circuit CR, the primary circuit C1, and the secondary circuit C2 in accordance with, for example, the operation command and the measurement information input to the controller 20.

More specifically, the controller 20 controls the operation frequency of the compressor 1, the opening degree of the pressure reducing device 3, the rotation frequency of the primary pump 5, the rotation frequency of the secondary pump 9, and energization of the electric heater 10 on the basis of, for example, the measurement information so that hot water required by the loads is supplied. The controller 20 controls the switching operation of the flow switching device 11 in accordance with the operation command.

The operation of the geothermal heat pump system 30 will be described below with reference to Fig. 1. In Fig. 1, the direction of arrow F1 is the direction in which the brine flows, the direction of arrow FR is the direction in which the refrigerant flows, and the direction arrow F2 is the direction in which the water flows. The geothermal heat pump system 30 performs a heating operation when the water-heating operation is performed to heat the water stored in the hot water tank 12 or when heating is required by the air-conditioning load B2.

In the heating operation, high-temperature high-pressure gas refrigerant discharged from the compressor 1 flows in the direction of arrow FR and flows into the secondary heat exchanger 2. The refrigerant that has flowed into the secondary heat exchanger 2 is condensed and liquefied into high-pressure low-temperature liquid refrigerant while dissipating heat in the secondary heat exchanger 2. At this time, the water that flows through the secondary circuit C2 is heated by the heat dissipated by the refrigerant so that hot water is obtained. The high-pressure low-temperature refrigerant that flows out of the secondary heat exchanger 2 is reduced in pressure by the pressure reducing device 3, and flows into the primary heat exchanger 4. The refrigerant that has flowed into the primary heat exchanger 4 receives heat from the heat medium that flows through the primary circuit C1 in the primary heat exchanger 4, and is evaporated and gasified. Then, the refrigerant flows out of the primary heat exchanger 4 and is suctioned into the compressor 1. The above-described cycle of the refrigerant circuit CR continues during the heating operation of the geothermal heat pump system 30.

The hot water generated by heating the water in the secondary heat exchanger 2 flows through the electric heater 10 and reaches the flow switching device 11. When heating is required by the air-conditioning load B2, the flow switching device 11 sets the destination of the hot water to the air-conditioning load B2. Accordingly, the hot water is circulated through the radiator, which is installed in a room, to heat the room. When the water-heating operation for heating the water stored in the hot water tank 12 is required, the flow switching device 11 sets the destination of the hot water to the hot water tank 12. Accordingly, the hot water is circulated through the hot water tank 12 so that the water stored in the hot water tank 12 is heated. After the water flows through the radiator in the room or the hot water tank 12 and the temperature of the water is reduced, the water is caused to flow into the secondary heat exchanger 2 by the secondary pump 9, and is heated into hot water by the secondary heat exchanger 2 again. The above-described cycle of the secondary circuit C2 continues during the heating operation of the geothermal heat pump system 30.

As described above, the geothermal heat pump system 30 exchanges heat between the refrigerant in the refrigerant circuit CR and the brine in the primary circuit C1 and between the refrigerant in the refrigerant circuit CR and the water in the secondary circuit C2, thereby collecting geothermal heat and supplying the collected heat to the loads.

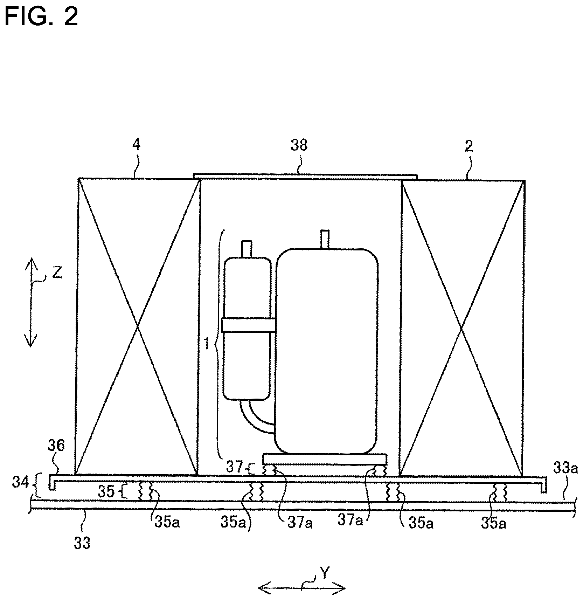

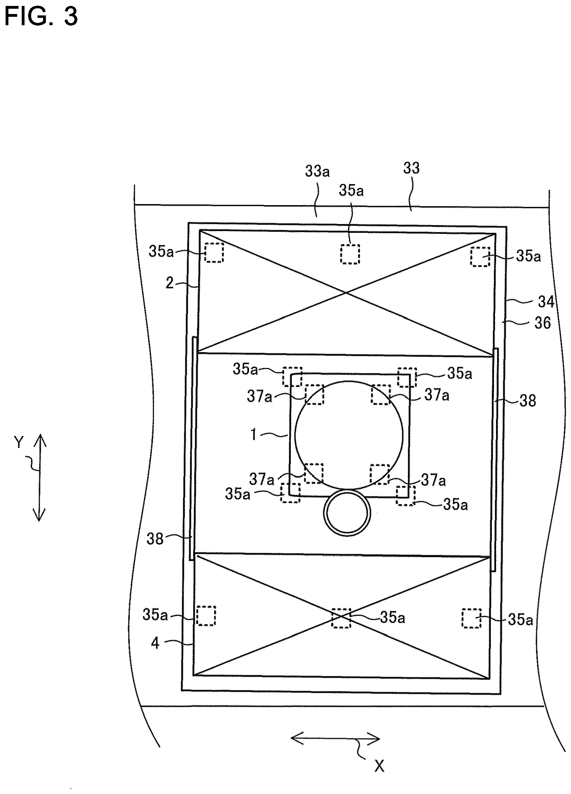

Fig. 2 is a side view of a vibration isolation structure of the geothermal heat pump system according to Embodiment 1 of the present disclosure. Fig. 3 is a plan view of the vibration isolation structure of the geothermal heat pump system according to Embodiment 1 of the present disclosure. The direction of arrow X is the width direction of the geothermal heat pump system 30, the direction of arrow Y is the depth direction of the geothermal heat pump system 30, and the direction of arrow Z is the height direction of the geothermal heat pump system 30. The structure including the compressor 1 of the geothermal heat pump system 30 will be described with reference to Figs. 2 and 3.

The geothermal heat pump system 30 includes a housing 33 and a vibration isolation support base 34 that is provided on a bottom surface 33a of the housing 33 and that supports the compressor 1 and other components. The compressor 1 is provided with a vibration isolator 37, and is placed on the vibration isolation support base 34 with the vibration isolator 37 disposed between the compressor 1 and the vibration isolation support base 34.

The vibration isolation support base 34 includes a vibration isolation unit 35 and a base part 36 on which the compressor 1 and other components are placed, and supports the plurality of components placed on the base part 36. The base part 36 is composed of, for example, a plate-shaped unit, such as a metal plate. At least the compressor 1, the primary heat exchanger 4, and the secondary heat exchanger 2 are placed on the base part 36. The vibration isolation unit 35 is composed of, for example, a plurality of elastic bodies 35a, and supports the base part 36.

The vibration isolator 37 provided to the compressor 1 is composed of, for example, a plurality of elastic elements 37a, and is disposed below the bottom surface of the compressor 1. The elastic bodies 35a of the vibration isolation unit 35 and the elastic elements 37a of the vibration isolator 37 are each made of, for example, vibration isolation rubber.

As the vibration isolation support base 34 including the vibration isolation unit 35 supports the compressor 1, the primary heat exchanger 4, and the secondary heat exchanger 2 in a vibration-isolated manner as described above, vibration of the compressor 1 is not easily transmitted to the housing 33 through the vibration isolation support base 34. In addition, as the compressor 1 is placed on the vibration isolation support base 34 with the vibration isolator 37 disposed between the compressor 1 and the vibration isolation support base 34, vibration of the compressor 1 is not easily transmitted to the base part 36. Thus, the vibration transmission path from the compressor 1 to the housing 33 is interrupted twice so that vibration and noise due to vibration are reduced. In addition, as the primary heat exchanger 4 and the secondary heat exchanger 2, whose masses are relatively large compared to those of a plurality of other components of the circuits of the geothermal heat pump system 30, are placed on the vibration isolation support base 34, vibration of the vibration isolation support base 34 is reduced.

The arrangement of the components on the vibration isolation support base 34 will be described below. The compressor 1 is disposed at the center of the housing 33 in the depth direction (direction of arrow Y). The primary heat exchanger 4 is disposed in front of the compressor 1, and the secondary heat exchanger 2 is disposed behind the compressor 1 in the depth direction (direction of arrow Y). The primary heat exchanger 4 and the secondary heat exchanger 2 each have a cuboid shape, and are each disposed in such a manner that the surface of the cuboid shape having the largest area faces the compressor 1. When the compressor 1, the primary heat exchanger 4, and the secondary heat exchanger 2 are disposed in this manner, the primary heat exchanger 4 and the secondary heat exchanger 2 are also used as soundproof elements for the compressor 1.

As described above, the primary heat exchanger 4 and the secondary heat exchanger 2 are each composed of, for example, a plate heat exchanger that exchanges heat between a heat medium in a liquid state and refrigerant, and therefore have less gaps compared to those in an air heat exchanger that exchanges heat between air and refrigerant. Accordingly, high soundproofing performance can be achieved.

The geothermal heat pump system 30 further includes soundproof walls 38 that obstruct the passage of noise generated by the compressor 1. The soundproof walls 38 include, for example, three plate-shaped parts arranged to cover portions of side surfaces and an upper surface of the compressor 1 that are not covered by the primary heat exchanger 4 or the secondary heat exchanger 2. Thus, the compressor 1 placed on the vibration isolation support base 34 is covered by the primary heat exchanger 4, the secondary heat exchanger 2, and the soundproof walls 38 so that leakage of sound generated by the compressor 1 to the outside of the housing 33 through air can be reduced.

When the dimensions of the primary heat exchanger 4 and the secondary heat exchanger 2 in the height direction (direction of arrow Z) and the width direction (direction of arrow X) are sufficiently greater than those of the compressor 1 so that a sufficient soundproofing effect can be achieved by the primary heat exchanger 4, the secondary heat exchanger 2, the housing 33, and other components, the soundproof walls 38 may be omitted.

The arrangement and structure of the plurality of elastic bodies 35a included in the vibration isolation unit 35 will be described below. The vibration isolation effect is usually reduced when load is unevenly applied to the vibration isolation unit. Therefore, the plurality of elastic bodies 35a are arranged so that load is evenly applied to the vibration isolation unit 35 depending on the arrangement of the components on the base part 36. As illustrated in Fig. 3, four elastic bodies 35a are disposed below the compressor 1, and three elastic bodies 35a are disposed below each of the primary heat exchanger 4 and the secondary heat exchanger 2 with constant intervals between the three elastic bodies 35a. When the primary heat exchanger 4 and the secondary heat exchanger 2 have substantially the same weight, the primary heat exchanger 4 and the secondary heat exchanger 2 may be supported with the same number of elastic bodies 35a as described above so that load can be evenly applied to the vibration isolation unit 35 between the position where the primary heat exchanger 4 is placed and the position where the secondary heat exchanger 2 is placed. The arrangement in which load is evenly applied is not limited to an arrangement in which the applied load is exactly constant over the entire region of the vibration isolation unit 35. A vibration isolation effect similar to that described above can be obtained when the applied load is substantially constant.

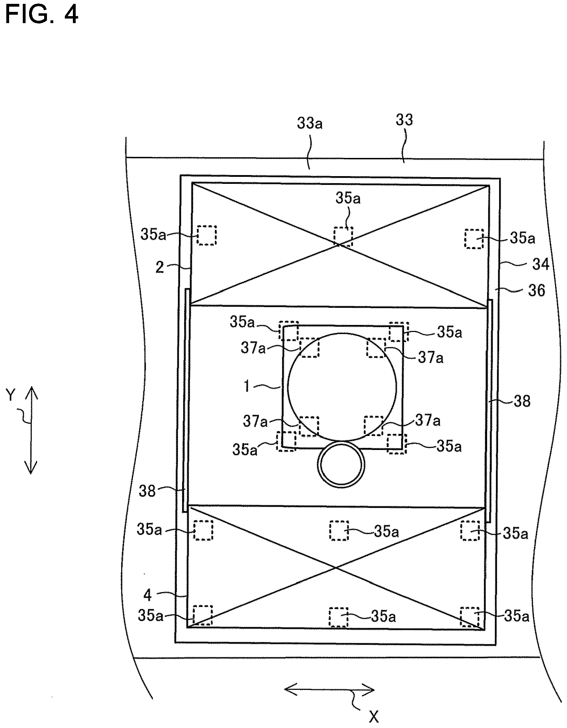

Fig. 4 is a plan view of another example of the vibration isolation structure of the geothermal heat pump system according to Embodiment 1 of the present disclosure. Fig. 4 shows the case in which the weight of the primary heat exchanger 4 is greater than the weight of the secondary heat exchanger 2. Six elastic bodies 35a are disposed below the primary heat exchanger 4, and three elastic bodies 35a are disposed below the secondary heat exchanger 2. When the primary heat exchanger 4 and the secondary heat exchanger 2 have different weights, the number of elastic bodies 35a disposed below each heat exchanger may be set on the basis of the weight of the heat exchanger as described above so that load can be substantially evenly applied to the vibration isolation unit 35 between the positions where the primary heat exchanger 4 and the secondary heat exchanger 2 are placed.

When the primary heat exchanger 4 and the secondary heat exchanger 2 have different weights, the vibration isolation unit 35 may include a plurality of types of elastic bodies 35a, such as springs and rubber elements. Alternatively, the vibration isolation unit 35 may include the same type of the plurality of elastic bodies 35a having different moduli of elasticity depending on the weights of the components to be supported. For example, elastic bodies 35a having a first modulus of elasticity E1 are disposed below the primary heat exchanger 4, and elastic bodies 35a having a second modulus of elasticity E2 that differs from the first modulus of elasticity E1 are disposed below the secondary heat exchanger 2. More specifically, when the weight of the primary heat exchanger 4 is greater than the weight of the secondary heat exchanger 2, the first modulus of elasticity E1 is set to be greater than the second modulus of elasticity E2. With such a structure, even when the weight is not even, load can be substantially evenly applied to the vibration isolation unit 35 by arranging the elastic bodies 35a in such a manner that the elastic bodies 35a below the primary heat exchanger 4 and the elastic bodies 35a below the secondary heat exchanger 2 are equal in number but have different moduli of elasticity.

Vibration and noise of the compressor 1 can be reduced as described above as long as the base part 36 of the vibration isolation support base 34 has an area sufficient to place at least the compressor 1, the primary heat exchanger 4, and the secondary heat exchanger 2. However, when the base part 36 is enlarged to allow some more of the components of the circuits to be placed on the base part 36 in addition to the compressor 1, the primary heat exchanger 4, and the secondary heat exchanger 2, the mass of the base part 36 itself can be reduced.

The mass of the base part 36 usually needs to be increased to isolate vibration. However, when the thickness of the base part 36 is simply increased, the weight or size of the housing 33 is increased. When the number of components placed on the base part 36 of the vibration isolation support base 34 is increased, the amplitude of vibration transmitted to the base part 36 can be reduced. Thus, vibration can be reduced without increasing the mass of the base part 36, and high vibration isolation effect can be achieved.

In such a case, components that are vibration sources, such as the pressure reducing device 3, the secondary pump 9, and the primary pump 5, may be placed on the vibration isolation support base 34 in addition to the compressor 1, the primary heat exchanger 4, and the secondary heat exchanger 2. With such a structure, the vibration isolation effect of the vibration isolation unit 35 can be enhanced by the masses of the components so that transmission of vibrations of the components can be reduced. In addition, the vibration isolation structure can be simplified.

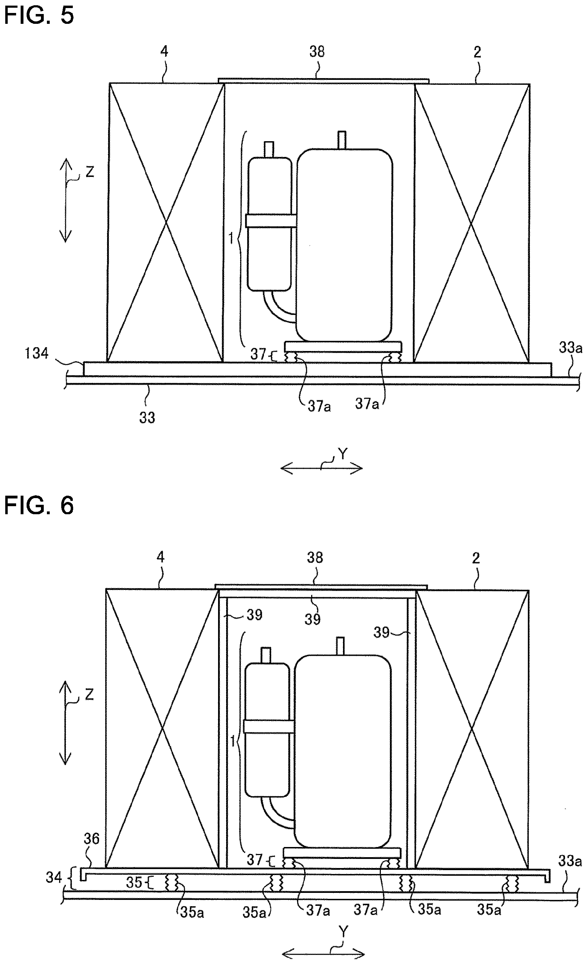

Each of the above-described vibration isolation unit 35 of the vibration isolation support base 34 and the above-described vibration isolator 37 provided to the compressor 1 may instead be composed of, for example, a single vibration isolation rubber element. Fig. 5 is a side view of another example of the vibration isolation structure of the geothermal heat pump system according to Embodiment 1 of the present disclosure. When a vibration isolation support base 134 is composed of, for example, a plate-shaped elastic body, such as a rubber sheet, the vibration isolation support base 134 is used as both the above-described vibration isolation unit 35 and the above-described base part 36. More specifically, the plate-shaped elastic body is capable of supporting the components including the compressor 1, the primary heat exchanger 4, and the secondary heat exchanger 2 in a vibration-isolated manner.

As described above, the geothermal heat pump system 30 according to Embodiment 1 includes the vibration isolation support base 34 including the vibration isolation unit 35, and two heat exchangers that each exchange heat between a heat medium in a liquid state and refrigerant are placed on the vibration isolation support base 34 together with the compressor 1 provided with the vibration isolator 37. Accordingly, sound generated by the compressor 1 can be partially blocked by the two heat exchangers. Therefore, the area in which a soundproof material is provided can be partially reduced, and the size of the vibration isolation support base 34 can be reduced accordingly. In addition, as the two heat exchangers are placed on the vibration isolation support base 34, the two heat exchangers are used as masses on the vibration isolation support base 34 so that sufficient vibration isolation performance can be achieved without increasing the thickness of the vibration isolation support base 34. Therefore, the size of the housing 33 can be reduced, and noise and vibration transmitted from the compressor 1 can also be reduced.

The compressor 1 is disposed between the primary heat exchanger 4 and the secondary heat exchanger 2. Accordingly, noise due to direct sound from the compressor 1 can be reduced by the primary heat exchanger 4 and the secondary heat exchanger 2 disposed on both sides of the compressor 1. As a result, the amount of soundproof material can be reduced and the area of the base part 36 can be reduced accordingly so that the size of the geothermal heat pump system 30 can be reduced.

The vibration isolation support base 34 is composed of a plate-shaped elastic body. In such a case, vibration isolation and support for the components can both be achieved by a single elastic body. Therefore, it is not necessary that the vibration isolation support base 34 include a plurality of parts, and the vibration isolation support base 34 can be easily manufactured.

The vibration isolation support base 34 includes the base part 36 on which the compressor 1, the primary heat exchanger 4, and the secondary heat exchanger 2 are placed, and the base part 36 is supported by the vibration isolation unit 35 composed of the plurality of elastic bodies 35a. The vibration isolation effect thus can be increased by setting the number and arrangement of the plurality of elastic bodies 35a depending on, for example, the arrangement and weights of the components.

The plurality of elastic bodies 35a are arranged so that load is evenly applied to the vibration isolation unit 35. Thus, the number and arrangement of the plurality of elastic bodies 35a may be adjusted to prevent a reduction in the vibration isolation performance due to load unevenly applied to the vibration isolation unit 35. In addition, the vibration isolation structure can be easily changed in response to a change in the arrangement of the components.

The first modulus of elasticity E1 of the elastic bodies 35a disposed below the primary heat exchanger 4 and the second modulus of elasticity E2 of the elastic bodies 35a disposed below the secondary heat exchanger 2 are set on the basis of the weight of the primary heat exchanger 4 and the weight of the secondary heat exchanger 2. Accordingly, even when the heat exchangers have different weights, load can be evenly applied to the vibration isolation unit 35 by arranging the elastic bodies 35a in such a manner that the elastic bodies 35a below the primary heat exchanger 4 and the elastic bodies 35a below the secondary heat exchanger 2 are equal in number but have different moduli of elasticity. As a result, reduction in the vibration isolation effect can be prevented without increasing the number of elastic bodies 35a, and an increase in cost due to an increase in the number of elastic bodies 35a can be prevented.

The geothermal heat pump system 30 further includes the soundproof walls 38 arranged to cover the portions of the compressor 1 that are not covered by any of the vibration isolation support base 34, the primary heat exchanger 4, and the secondary heat exchanger 2. Accordingly, the compressor 1 can be covered by the primary heat exchanger 4, the secondary heat exchanger 2, and the soundproof walls 38 so that direct sound from the compressor 1 of the geothermal heat pump system 30, which is installed indoors, can be blocked and noise can be further reduced.

According to the related art, noise from the compressor 1 is reduced by enclosing the compressor 1 with, for example, soundproof walls. Therefore, the soundproof walls are disposed at four side surfaces of the compressor 1 facing in four directions and an upper surface of the compressor 1. In contrast, in the above-described geothermal heat pump system 30, some of the soundproof walls can be replaced by the primary heat exchanger 4 and the secondary heat exchanger 2 so that it is not necessary to place the soundproof walls 38 at two surfaces, which are front and back surfaces, of the compressor 1. Therefore, the size of the housing 33 depth direction (direction of arrow Y) of the geothermal heat pump system 30 can be reduced.

### Embodiment 2

Fig. 6 is a side view of a vibration isolation structure of a geothermal heat pump system according to Embodiment 2 of the present disclosure. Embodiment 2 differs from Embodiment 1 in that the geothermal heat pump system 30 additionally includes sound absorbers 39. In Embodiment 2, items that are not particularly described are the same as those in Embodiment 1, and the same functions and structures are denoted by the same reference signs.

With reference to Fig. 6, the sound absorbers 39 are provided on a surface of the primary heat exchanger 4 that faces the compressor 1, a surface of the secondary heat exchanger 2 that faces the compressor 1, and surfaces of the soundproof walls 38 that face the compressor 1. The area in which the sound absorbers 39 are provided is set as appropriate to the sound radiation characteristics of the compressor 1. The sound absorbers 39 may either be made solely of open-cell foam, such as felt or sponge, or be made of a laminate obtained by placing open-cell foam on a material having a mass greater than that of the open-cell foam, such as a metal plate or rubber, to adjust the sound absorbing performance. Among the examples of the material of the sound absorbers 39, felt is flexible in shape and exhibits high sound absorbing performance. Therefore, even when the installation space is limited, felt may be suitably used as the material of the sound absorbers 39.

As described above, the primary heat exchanger 4 and the secondary heat exchanger 2 are each composed of, for example, a plate heat exchanger. Accordingly, the sound absorbers 39 can be disposed on the primary heat exchanger 4 and the secondary heat exchanger 2. If, for example, one or each of the primary heat exchanger 4 and the secondary heat exchanger 2 is an air heat exchanger, no sound absorbers 39 can be disposed on the air heat exchanger as the air heat exchanger needs to allow outside air to pass through the air heat exchanger.

In particular, a plate heat exchanger is heat-insulated more effectively than is an air heat exchanger, and therefore does not easily cause dew condensation on the surfaces of the plate heat exchanger. Accordingly, when the sound absorbers 39 are provided on plate heat exchangers, deterioration of the sound absorbers 39 due to dew condensation water does not easily occur. In addition, the plate heat exchangers are used as rigid walls having a certain thickness and strength in the housing 33, and provide sound insulation. Therefore, the soundproofing effect can be enhanced by using the sound absorbers 39 together with the plate heat exchangers.

Embodiments of the present disclosure are not limited to the above-described embodiments, and various modifications are possible. For example, although the sound absorbers 39 are provided on the primary heat exchanger 4, the secondary heat exchanger 2, and the soundproof walls 38 in Embodiment 2, the sound absorbers 39 may be provided only on the primary heat exchanger 4 and the secondary heat exchanger 2 when no soundproof walls 38 are provided. Alternatively, the sound absorbers 39 may be provided also on portions of inner surfaces of the housing 33 that face the compressor 1 in addition to the primary heat exchanger 4 and the secondary heat exchanger 2.

Although an example has been described in which the primary heat exchanger 4 and the secondary heat exchanger 2 are arranged to face each other with the compressor 1 placed between the primary heat exchanger 4 and the secondary heat exchanger 2, the arrangement of the primary heat exchanger 4 and the secondary heat exchanger 2 to the compressor 1 may be set as appropriate to the positions of components in the housing 33. For example, the primary heat exchanger 4 may be disposed to the right of the compressor 1 and the secondary heat exchanger 2 may be disposed behind the compressor 1 so that the primary heat exchanger 4 and the secondary heat exchanger 2 substantially form an L-shape. Also in this case, two surfaces of the compressor 1 are covered with the primary heat exchanger 4 and the secondary heat exchanger 2 so that the amount of the soundproof material can be reduced and noise of the compressor 1 can be reduced by the components of the refrigerant circuit CR.

The elastic bodies 35a of the vibration isolation unit 35 and the elastic elements 37a of the vibration isolator 37 may have any shape. For example, the elastic bodies 35a and the elastic elements 37a may each be rod-shaped and extend in the width direction (direction of arrow X) along the components disposed above the elastic bodies 35a and the elastic elements 37a.

Although an example in which the primary heat exchanger 4 and the secondary heat exchanger 2 each have a cuboid shape is described above, the primary heat exchanger 4 and the secondary heat exchanger 2 may each have any shape. Reference Signs List

1 compressor 2 secondary heat exchanger 3 pressure reducing device 4 primary heat exchanger 5 primary pump 6 first flow rate sensor 7 inlet temperature sensor 8 outlet temperature sensor 9 secondary pump 10 electric heater 11 flow switching device 12 hot water tank 12a water supply pipe 12b hot-water discharge pipe 13 second flow rate sensor 14 temperature sensor 15 return temperature sensor 16 tank temperature sensor 18 underground heat exchanger 18a heat collection pipe group 20 controller 21 remote controller 30 geothermal heat pump system 31 heat pump device 32 hot water heating device 33 housing 33a bottom surface 34 vibration isolation support base 35 vibration isolation unit 35a elastic body 36 base part 37 vibration isolator 37a elastic element 38 soundproof wall 39 sound absorber 134 vibration isolation support base B1 hot water supply load B2 air-conditioning load C1 primary circuit C2 secondary circuit CR refrigerant circuit E1 first modulus of elasticity E2 second modulus of elasticity G ground

## Claims

1. A geothermal heat pump system, comprising:
a refrigerant circuit including a compressor provided with a vibration isolator, a primary heat exchanger that exchanges heat between refrigerant and a primary heat medium that is in a liquid state and uses ground as a heat source, and a secondary heat exchanger that exchanges heat between the refrigerant and a secondary heat medium that is in a liquid state; and
a vibration isolation support base that includes a vibration isolation unit and supports the compressor, the primary heat exchanger, and the secondary heat exchanger with the vibration isolation unit disposed between the vibration isolation support base and a set of the compressor, the primary heat exchanger, and the secondary heat exchanger.

2. The geothermal heat pump system of claim 1,
wherein the compressor is disposed between the primary heat exchanger and the secondary heat exchanger.

3. The geothermal heat pump system of claim 1 or 2,
wherein the vibration isolation support base comprises a plate-shaped elastic body.

4. The geothermal heat pump system of claim 1 or 2,
wherein the vibration isolation support base includes a base part on which the compressor, the primary heat exchanger, and the secondary heat exchanger are placed, and
wherein the vibration isolation unit comprises a plurality of elastic bodies and supports the base part.

5. The geothermal heat pump system of claim 4,
wherein the plurality of elastic bodies are arranged in such a manner that load is evenly applied to the vibration isolation unit.

6. The geothermal heat pump system of claim 4 or 5,
wherein the vibration isolation unit includes
an elastic body disposed below the primary heat exchanger and having a first modulus of elasticity, and
an elastic body disposed below the secondary heat exchanger and having a second modulus of elasticity that differs from the first modulus of elasticity, and
wherein the first modulus of elasticity and the second modulus of elasticity are set on a basis of a weight of the primary heat exchanger and a weight of the secondary heat exchanger.

7. The geothermal heat pump system of any one of claims 1 to 6, further comprising
a soundproof wall disposed to cover a portion of the compressor that is not covered by any of the vibration isolation support base, the primary heat exchanger, and the secondary heat exchanger.

8. The geothermal heat pump system of claim 7,
wherein a sound absorber that absorbs sound is provided on a surface of the soundproof wall that faces the compressor.

9. The geothermal heat pump system of any one of claims 1 to 8,
wherein a sound absorber that absorbs sound is provided on each of a surface of the primary heat exchanger that faces the compressor and a surface of the secondary heat exchanger that faces the compressor.
